# EUROPÄISCHE PATENTSCHRIFT

(11) **EP 0 859 501 B1**
(45) Veröffentlichungstag und Bekanntmachung des Hinweises auf die Patenterteilung: **26.04.2006**
(21) Anmeldenummer: 98101785.8
(22) Anmeldetag: 03.02.1998
(51) Int. Cl.: H04M 11/00, H04M 1/72, H04B 7/00

(54) **Bus-Verknüpfungsmodul**
Bus connection module
Module de connexion à un bus

(30) Priorität: 13.02.1997 DE 19705438
(43) Veröffentlichungstag der Anmeldung: 19.08.1998
(73) Patentinhaber: Diehl Stiftung & Co. KG, 90478 Nürnberg (DE)
(72) Erfinder: Westphal, Robert, Dr.-Ing., 90425 Nürnberg (DE); Bauernfeind, Dieter, Dipl.-Ing. (FH), 90559 Burgthann (DE)
(74) Vertreter: Diehl Patentabteilung

(56) Entgegenhaltungen:
- WO-A-95/35618
- DE-A- 4 321 304

## Beschreibung

Die Erfindung betrifft einen Bus-Verknüpfungsmodul zur Verbindung eines elektrischen Gerätes, dessen Betriebszustand abgefragt oder beeinflußt werden soll, mit einer örtlich getrennt stehenden Dateneingabe- und ausgabeeinrichtung für die Zusammenarbeit mit dem Gerät.

Geräte dieser Art sind bereits üblich, z. B. bei Diagnosegeräten für KFZ, die über Anschließen eines Auswertegerätes an die Diagnosebuchse der Steuerelektronik des Kraftfahrzeugs eine Bewertung des Betriebszustandes des Letzteren ermöglichen.

Hierauf bezieht sich die Erfindung jedoch nicht. Es geht vielmehr um die Abfrage von Geräten, beispielsweise im Haushalt durch dessen Benutzer vermittels einer entfernt stehenden Einrichtung. Beispielsweise wird über das "Arigo-System", welches die Firma IBM vorschlägt, eine solche Möglichkeit, durch Verkabelung verschiedenster Geräte im Haushalt über ein Bussystem, eine weitgehende Überwachung verschiedenster Geräte geschaffen.

Aus der DE 43 21 304 A1 ist eine Anlage zum Steuern und/oder Überwachen von Geräten mittels eines Fernwirkgebers bekannt, bei welcher jedes Gerät mit einer Masterbox in Wirkverbindung steht und dieser Masterbox zumindest ein Fernwirkgeber zugeordnet ist. Die Masterbox weist einen Sprachspeicher auf, in welchem Sprachsegmente für die Quittierung der durch das System ausführbaren Befehle enthalten sind.

Des weiteren ist in der WO 95/35618 A1 eine Fernsteuerungsanordnung für elektrische Geräte beschrieben. Dort ist das femzusteuemde Gerät an eine Basisstation eines DECT-Schnurlostelefons angeschlossen, welche die von dem zugehörigen Mobilteil des Schnurlosteiefons kommenden Steuerbefehle an das elektrische Gerät und Rückmeldungen des elektrischen Geräts an das Mobilteil durchleitet.

Die erwähnten Geräte haben den Nachteil, dass Meldungen über Betriebszustände und Fernwirkfunktionen nur innerhalb der Reichweite des jeweiligen Zentralgeräts (Masterbox oder DECT-Schnurlostelefons) übertragen werden können.

Ausgehend von diesem Stand der Technik ist es Aufgabe der Erfindung, ein einfaches Gerät zu schaffen, in welchem eine drahtlose Fernabfrage von Geräten im Haus oder in einer Fabrik sowie gegebenenfalls die Einwirkung auf diese Geräte über größere Entfernung ermöglicht wird.

Zur Lösung der gestellten Aufgabe schlägt die Erfindung die im Anspruch 1 gekennzeichneten Merkmale vor.

Die Erfindung geht somit von einem Bus-Verknüpfungsmodul aus, bei welchem Schnittstellen sowohl zu einem verdrahteten Bussystem, welches zu einem oder mehreren Geräten führt als auch Schnittstellen zu einem drahtlosen Bus, vorzugsweise den heute immer bedeutsamer werdenden sogenannten DECT-Bus, bestehen. DECT bedeutet hier Digital European Cordless Telecomunication. Am Ende des DECT-Busses befindet sich vorzugsweise ein schnurloses Telefon, es kann jedoch auch eine Endstelle in Form eines PC's mit oder ohne Sprachausgabe vorliegen.

Erfindungsgemäß ist weiterhin vorgesehen, dass in einem ersten Speicher eines Speichersystems sowohl fest eingespeicherte Daten, welche zu vorgesehenen Betriebszuständen des Gerätes korreliert sind, als auch fest eingespeicherte Daten für vorgesehene Fernwirkfunktionen im Gerät enthalten sind, und dass ferner in einem weiteren Speicher des Speichersystems Rufnummern (Telefon, Telefax) enthalten sind, wobei die Datensätze des weiteren Speichers den Datensätzen des ersten Speichers zugeordnet sind und bei Initialisierung einer entsprechenden Meldung im ersten Speicher durch das Gerät selbsttätig eine vorgesehene Rufnummer gewählt und auf diese die Meldung übertragen wird.

Gemäß Weiterbildung der Erfindung ist vorgesehen, daß das Gerät in der Weise an den Modul angepaßt ist, daß es eine Schnittstelle zu dem bedrahteten Standard-Bus-System besitzt, daß es eine Datenausgabeeinrichtung einschließlich einem elektronischen Steuerwerk aufweist, über die in regelmäßigen Abständen, oder bei Bedarf (Notfall), Daten in das Speichersystem des Moduls übertragen werden und/oder das es eine Datenspeichereinrichtung sowie ein Steuerwerk aufweist, welches ein Fernwirksystem im Gerät initialisieren und damit Funktionen dort auslösen kann.

Durch diese Ausgestaltung der Erfindung erhält das fragliche Gerät, beispielsweise eine Heizung, eine Waschmaschine oder auch eine Maschine in einer Fabrik, eine Intelligenz vorgeschaltet, welche Diagnosedaten ausgibt, die an anderer Stelle ausgewertet werden können, mit der Folge, daß bei einem unzulässigen Betriebszustand von außen auf das Gerät eingewirkt werden kann. Aus diesem Grund ist im Gerät ein Fernwirksystem eingebaut, welches einen Notstopp oder dergleichen veranlassen kann.

Gemäß Weiterbildung der Erfindung ist das Dateneingabe- und -ausgabegerät zum drahtlosen Empfang von Daten des Moduls und zur drahtlosen Eingabe von Daten in den Modul geeignet; es enthält zur Darstellung der empfangenen Daten eine Anzeige und/oder Sprachausgabe und/oder Bildschirm; in einfachster Weise ist das Gerät als drahtloses Telefon - DECT-fähig - ausgebildet.

Gemäß weiterer, bevorzugter Ausbildung der Erfindung ist vorgesehen, daß mehrere Speicher, eine elektronische Steuereinrichtung, eine DFÜ-Einheit als Schnittstelle zum drahtlosen Bussystem sowie eine Schnittstelle (z. B. V24) zum bedrahteten Bussystem vorgesehen sind, daß weiterhin ein erster Speicher mehrere Register sowohl zur Aufnahme von festeingespeicherten Daten, korreliert zu vorgesehenen Betriebszuständen, einschließlich Notfall, des Gerätes, als auch zur Aufnahme von festeingespeicherten Daten fur vorgesehene Fernwirkfunktionen im Gerät aufweist, daß ferner ein zweiter Speicher mit mehreren Registern zur Aufnahme von Daten zur Sprachausgabesteuerung vorgesehen und derart dem ersten Speicher zugeordnet ist, daß in jeweils einem Register des zweiten Speichers ein Datensatz steht, welcher dem Inhalt eines Registers im ersten Speicher zugeordnet und so aufgebaut ist, daß er nach Umsetzung in menschlich verständliche Sprache im Endgerät ausgegeben werden kann und daß schließlich die Steuereinrichtung den Datenein- und -ausgang im Modul und die Speicherzuordnung verwaltet.

In dem Modul sind somit zwei Speicher mit jeweils mehreren Registern vorgesehen, wobei in dem ersten Speicher wichtige Betriebszustandsmeidungen abgelegt sind. Diese Meldungen werden von dem Gerät durch einen regelmäßigen Datenstrom jeweils initialisiert. In einem weiteren Teil des ersten Speichers sind Fernwirkbefehle abgelegt, welche zum Gerät hin übertragen werden können und dort nach entsprechender Umsetzung die gewünschte Funktion auslösen. Die Initialisierung dieser Fernwirkbefehle erfolgt über die Steuereinrichtung von dem Dateneingabegerät, beispielsweise also dem Telefon.

In dem zweiten Speicher sind in mehreren Registern jeweils Datensätze abgelegt, die eine Sprachausgabe zu steuern in der Lage sind und jeweils einem der im ersten Speicher abgelegten Betriebszustandsangaben zugeordnet ist. Dies beinhaltet, daß, unter Vermittlung der Steuereinrichtung, bei Initialisierung einer abgespeicherten Betriebszustandsangabe im zweiten Speicher der entsprechende Datensatz initialisiert wird, welcher eine Sprachausgabe genau dieses Betriebszustandes steuert.

In nochmaliger Weiterbildung der Erfindung ist vorgesehen, daß ein dritter Speicher mit mehreren Registern vorhanden ist, in denen Rufnummern (Telefon, Telefax) eingespeichert sind, die jeweils einem oder mehreren Registerinhalten des zweiten Speichers zugeordnet sind, daß die Steuereinrichtung bei Initialisierung einer entsprechenden Meldung im ersten Speicher durch das Gerät, selbsttätig eine vorgesehene Rufnummer wählt und auf diese über die Sprachausgabesteuerung des zweiten Speichers die Meldung übertragen läßt.

Mit dieser Weiterbildung der Erfindung erreicht man die höchste Ausbaustufe, die der erfinderische Grundgedanke ermöglicht. Sobald nämlich ein Störfall vorliegt, kann das Gerät durch Ausgabe einer entsprechenden Meldung an die Steuereinrichtung veranlassen, daß diese selbsttätig eine voreingegebene Rufnummer, sei es die des abwesenden Hausherrn oder die eines Installateurs, wählt, und dort vermittels der beschriebenen Sprachausgabe eine Fehlermeldung durchgibt. Entweder kann die betreffende Person, sofern sie dazu berechtigt ist, telefonisch über Fernwirken über die Steuereinrichtung an das Gerät einen entsprechenden Befehl geben, welcher dieses abschaltet oder eine sonstige Notmaßnahme einleiten, oder die betreffende Person ist zumindest gewarnt und kann durch persönliches Erscheinen größeren Schaden vermeiden.

Im folgenden sollen diese und noch weitere Merkmale der Erfindung anhand der Zeichnung noch näher erläutert werden.

Es zeigen:
- Figur 1: Das Systemdiagramm der Anlage in einem Blockschaltbild;
- Figur 2: In einem Funktionsdiagramm den grundsätzlichen Aufbau des Moduls.

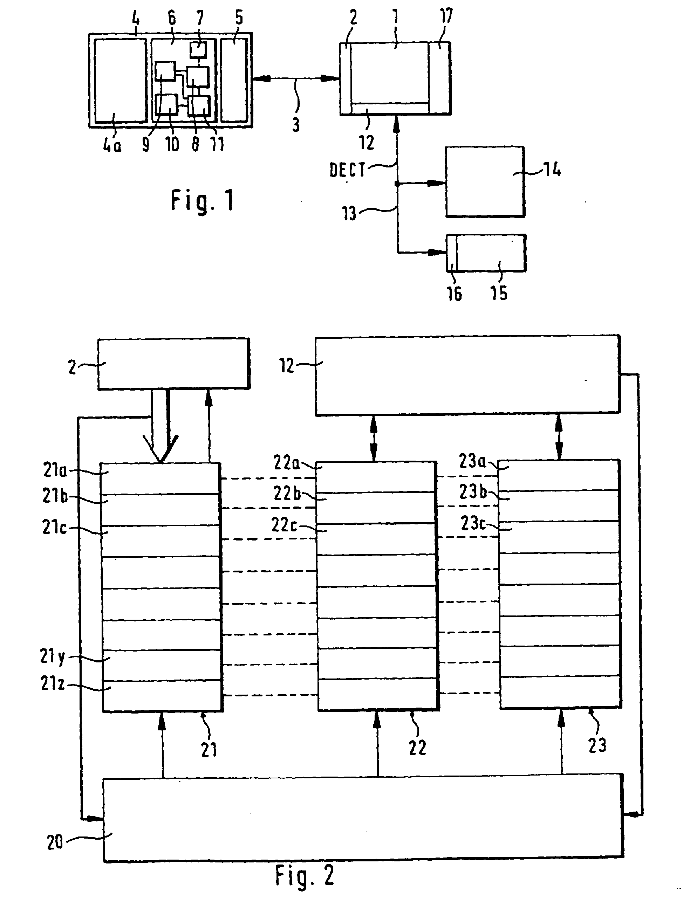

In Figur 1 ist mit 1 der Busverknüpfungsmodul, nämlich eine elektronische Steuereinrichtung bezeichnet. Diese besitzt eine Schnittstelle 2 an welche sich ein genormter bedrahteter Standardbus 3 anschließt, der beispielsweise durch die Norm V24 betrieben werden kann oder als CAN-Bus (Controller Area Network) oder als EIB-Bus ausgebildet sein kann. An dieses Bussystem können in üblicher Weise mehrere Geräte angeschlossen werden; in Figur 1 ist nur ein solches Gerät 4 dargestellt, welches die Steuereinrichtung 4a einer Heizung sein kann. Im Sinne der Erfindung ist es jedoch möglich, auch andere Hausgeräte, wie Waschmaschinen, Geschirrspüler, Trockner, Herde an diese Stelle zu setzen. Ebenso wäre es möglich, eine Maschine in einer Fabrikhalle an den Bus 3 anzuschließen.

Dieses Gerät 4 ist mit einer an das Bussystem 3 angepaßten Schnittstelle 5 ausgestattet und weist ferner eine elektronische Steuereinheit 6 auf, welche die folgenden Untergruppen besitzt. Eine Datenausgabeeinrichtung 7, welche unter Steuerung des Steuerwerkes 8, Daten über den Betriebszustand des Gerätes über die Schnittstelle 5, den Bus 3 und die Schnittstelle 2 an die Steuereinrichtung 1 abgibt. Diese Betriebszustandsdaten können auch solche enthalten, welche einen Notfall kennzeichnen und eine besondere Aktion in der Steuereinrichtung auslösen müssen.

Die elektronische Steuereinrichtung 6 enthält ferner einen Datenspeicher 9 und ein Fernwirksystem 10, welche unter Steuerung eines zweiten Steuerwerks 11 von der Steuereinrichtung 1 erhaltene Befehle zunächst abspeichern und dann sofort, oder zeitgesteuert, über das Fernwirksystem 10 Funktionen im Gerät 4 auslösen.

Die Steuereinrichtung 1 besitzt eine zweite Schnittstelleneinrichtung 12, welche am einen DECT-Bus 13 angeschlossen ist. Im Sinne der Erfindung wäre jedoch auch ein anderer genormter drahtloser Bus verwendbar. An diesen DECT-Bus 13 ist ein drahtloses Telefon 14 angeschlossen, welches in seiner Tastenbelegung für die Steuerung der bidirektionalen Kommunikation mit der Steuereinrichtung ausgelegt ist. An diesen DECT-Bus können mehrerer solcher schnurloser Telefone angeschlossen sein, es ist auch möglich, sonstige Dateneingabe- und -ausgabegeräte anzuschließen. Im Beispiel ist ein PC15 über ein Modem 16 angeschlossen, der über seine Tastatur sowohl Daten an die Steuereinrichtung 1 abgeben als auch an dem Bildschirm Daten von dort empfangen kann. Das Modem muß natürlich geeignet sein, eine drahtlose Kommunikation zu ermöglichen.

Schließlich ist an die Steuereinrichtung 1 noch ein Sprachausgabemodul 17 angeschlossen, welcher zur Kontrolle der Sprachausgabe der Steuereinrichtung 1 dient. Dieser Sprachmodul 17 kann daher entweder unmittelbar an die Steuereinrichtung 1 angeschlossen sein, er könnte aber auch an dem DECT-Bus 13 liegen.

In Figur 2 ist in einem Funktionsdiagramm die Steuereinrichtung 1 mehr detailliert dargestellt. Einem Steuerwerk 20 sind drei Speicher 21, 22 und 23 nachgeordnet, welche jeweils mehrere Speicherregister 21a, 21b, 21c ff., 22a, 22b, 22c ff. und 23a, 23b und 23c ff. aufweisen. Mit 2 ist die Schnittstelle zum bedrahteten Bussystem, in diesem Falle eine V24-Schnittstelle bezeichnet. Mit 12 ist dies zweite Schnittstelle der Steuereinrichtung 1, nämlich die an den DECT-Bus angeschlossene, gekennzeichnet.

In die Register 21a ff. des Speichers 21 sind jeweils die Daten für einen Betriebszustand des Gerätes 4 niedergelegt. Wenn beispielsweise zehn Betriebszustände einer Heizung überwacht werden sollen, einschließlich etwaiger Notsignale, so werden entsprechend viele Register des Speichers 21 mit jeweils einem Datensatz belegt. Über die V24-Schnittstelle 2 muß dann nur ein kurzer Code übertragen werden, der kennzeichnet, welcher Betriebszustand gemeint ist; das Steuerwerk 20 wählt dann das entsprechende Register im Speicher aus, um dessen Datensatz auszuwerten. Auf diese Weise wird die ständige Übertragung größeren Datenmengen vom Gerät zum Speicher 21 vermieden. Es muß jeweils nur ein kurzer Code übertragen werden, das Steuerwerk 20 nimmt die Zuordnung zum entsprechenden Datensatz vor.

Neben diesen Speicherregistern für Betriebszustände können im Speicher 21 noch solche vorgesehen sein, welche Befehlsdaten für die Einwirkung auf das Gerät aufnehmen. Dies bedeutet, daß bei Initialisierung dieser Register durch das Steuerwerk 20 über die Schnittstelle 2 ein zugeordneter Code an das Gerät 4 abgesandt wird, welcher dort in dem Steuerwerk 11 (siehe Figur 1) und der Fernwirkeinheit 10, in einen Befehl zur Auslösung einer Funktion im Gerät umgesetzt wird.

In dem Speicher 22 sind ebenfalls eine Reihe von Registern 22a bis 22c ff. vorgesehen, wobei jeweils ein Register einem Register im Speicher 21 zugeordnet ist, mit Ausnahme jener, die sich auf die Speicherung der Fernwirkdaten (Register 21y und 21z) beziehen. In diesen Speicherregistern 22a bis 22c ff. sind jeweils Datensätze gespeichert, welche eine Sprachausgabe steuern. Im Einzelnen bedeutet dies, daß einem Betriebszustand (Brenner läuft ordnungsgemäß) der in Speicher 21 im Register 21 a eingespeichert ist, im zugeordneten Speicherregister 22a des Speichers 22 ein Datensatz abgelegt ist, welcher eine Sprachausgabe genau dieses Befehls ermöglicht. Auf diese Weise kann die durch Speicher 21 und das Steuerwerk 20 gesteuerte digitale Verarbeitung eines Betriebszustandes als menschlich verständliche Meldung aus dem Speicher 22, ebenfalls gesteuert vom dem Steuerwerk 20, ausgegeben werden. Diese Ausgabe erfolgt über die Schnittstelle 12.

Schließlich ist in der Steuereinrichtung 1 noch ein Speicher 23 vorgesehen, welcher mit seinen verschiedenen Registern zur Aufnahme von Telefonrufnummern und/oder Telefaxnummern dient. Dabei erfolgt eine Zuordnung zu den Registern der Speicher 21 und 22 derart, daß beim Eintreten vorbestimmter Betriebszustände, welche eine Aktion von außerhalb bewirken sollen, eine entprechende Ruf- oder Faxnummer zugeordnet wird, welche unter Vermittlung des Steuerwerkes 20 automatisch angewählt wird. Das Steuerwerk 20 arbeitet dabei so, daß nach Herstellung der Verbindung zu dem gerufenen Teilnehmer der entsprechende sprachliche Text aus dem Speicher 22 übermittelt wird. Auf diese Weise kann der Angerufene sofort erkennen, welcher Betriebszustand bei dem Gerät 4 vorliegt und er kann entsprechende Maßnahmen ergreifen. Diese können z. B. darin bestehen, daß er einen codierten Befehl an das Steuerwerk 20 gibt, welches den entsprechenden Fernwirkbefehl im Speicher 21 auswählt und die Übertragung an das Gerät 4 veranlaßt. Dort wird in der schon erläuterten Weise über die Fernwirkeinheit 10 die Funktion im Gerät 4 ausgelöst.

Im gegebenen Zusammenhang ist es gleichgültig, welches Endgerät an dem DECT-Bus 13 angeschlossen ist. Besonders bevorzugt ist jedoch das schnurlose, dem System angepaßte Telefon, da dieses weit verbreitet und als Handy auch ortsbeweglich ist. Damit läßt sich eine bisher nicht möglich gewesene Überwachung entfernter Anlagen durch einen Benutzer gewährleisten und gegebenenfalls schnell entsprechende Maßnahmen ergreifen. Diese Funktionen werden durch die Möglichkeiten, die das System durch selbsttätiges Anwählen einer wichtigen Person bietet, noch weiter verbessert.

## Patentansprüche

1. Bus-Verknüpfungsmodul zur Verbindung eines elektrischen Geräts, dessen Betriebszustand abgefragt oder beeinflusst werden soll, mit einer örtlich getrennt stehenden Dateneingabe- und -ausgabeeinrichtung für die Zusammenarbeit mit dem Gerät,
wobei der Modul ein Speichersystem (21,22,23), eine Steuerelektronik (1) sowie einerseits eine erste Kommunikations-Schnittstelle (2) zu einem bedrahteten Standard-Bus-System (3) zum Gerät (4) und andererseits mindestens eine Kommunikations-Schnittstelle (12) zu einem drahtlosen genormten Standard-Bus-System (13) zum Dateneingabe- und -ausgabegerät (14,15) besitzt,
wobei weiterhin in einem ersten Speicher (21) des Speichersystems (21,22,23) sowohl fest eingespeicherte Daten, welche zu vorgesehenen Betriebszuständen des Gerätes korreliert sind, als auch fest eingespeicherte Daten für vorgesehene Fernwirkfunktionen im Gerät enthalten sind,
**dadurch gekennzeichnet,**
**dass** ein weiterer Speicher (23) vorhanden ist, in dem Rufnummern eingespeichert sind, die jeweils einem oder mehreren Datensätzen des ersten Speichers (22) zugeordnet sind, dass das Modul Mittel aufweist, um, bei Initialisierung einer entsprechenden Meldung im ersten Speicher (21) durch das Gerät, selbsttätig eine vorgesehene Rufnummer zu wählen und an diese die Meldung zu übertragen.

2. Modul nach Anspruch 1,
**dadurch gekennzeichnet,**
**dass** in einem zweiten Speicher (22) des Speichersystems (21,22,23) Daten zu einer Sprachausgabesteuerung enthalten sind,
wobei die Datensätze des zweiten Speichers (22) den Datensätzen des ersten Speichers (21) zugeordnet und so aufgebaut sind, dass sie nach Umsetzung in menschlich verständlicher Sprache im Endgerät (14,15) ausgegeben werden können.

3. Modul nach Anspruch 2,
**dadurch gekennzeichnet,**
**dass** der erste Speicher (21) mehrere Register (21a-21c) zur Aufnahme der fest eingespeicherten Daten aufweist,
**dass** der zweite Speicher (22) mit mehreren Registern (22a-22c) zur Aufnahme der Daten zur Sprachausgabesteuerung und der weitere Speicher (23) mit mehreren Registern (23a-23c) zur Einspeicherung der Rufnummern versehen und derart dem ersten Speicher (21) zugeordnet sind,
**dass** in jeweils einem Register (22a-22c) des zweiten Speichers (22) sowie in einem Register (23a-23c) des weiteren Speichers (23) ein Datensatz steht, welcher dem Inhalt eines Registers im ersten Speicher (21) zugeordnet ist,
und **dass** schließlich ein elektronisches Steuerwerk (20) den Datenein- und -ausgang im Modul und die Speicherzuordnung verwaltet.

4. Modul nach Anspruch 2 oder 3,
**dadurch gekennzeichnet,**
**dass** die Übertragung der Meldung auf die durch das Gerät selbsttätig gewählte Rufnummer über die Sprachausgabesteuerung des zweiten Speichers (22) erfolgt.

5. Verwendung eines Moduls nach Anspruch 1 mit einem Gerät (4), welches in der Weise an den Modul angepasst ist, dass es eine Schnittstelle (5) zu dem bedrahteten Standard-Bus-System (3) besitzt, dass es eine Datenausgabeeinrichtung (7) einschließlich einem elektronischen Steuerwerk (8) aufweist, über die in regelmäßigen Abständen oder bei Bedarf Daten in das Speichersystem (21,22,23) des Moduls übertragen werden und/oder dass es eine Datenspeichereinrichtung (9) sowie ein Steuerwerk (11) aufweist, welches ein Fernwirksystem (10) im Gerät initialisieren und damit Funktionen dort auslösen kann.

6. Verwendung eines Moduls nach Anspruch 1 mit einem Dateneingabe- und -ausgabegerät (14,15), welches zum drahtlosen Empfang von Daten des Moduls und zur drahtlosen Eingabe von Daten in den Modul geeignet ist und zur Darstellung der empfangenen Daten eine Anzeige und/oder Sprachausgabe und/oder Bildschirm besitzt, somit insbesondere als drahtloses Telefon ausgebildet ist.

## Revendications

1. Module de connexion à un bus pour relier un appareil électrique dont l'état de fonctionnement doit être interrogé ou influencé, avec un dispositif d'entrée et de sortie de données séparé géographiquement, pour collaborer avec l'appareil,
ce module possédant un système de mémoire (21, 22, 23), une électronique de commande (1) ainsi que, d'une part, une première interface de communication (2) avec un système de bus standard à fil (3) conduisant à l'appareil (4) et, d'autre part, au moins une interface de communication (12) avec un système de bus standard normalisé sans fil (13) conduisant à l'appareil d'entrée et de sortie de données (14, 15),
des données mémorisées en mémoire morte qui sont corrélées avec des états de fonctionnement prévus de l'appareil, ainsi que des données mémorisées en mémoire morte destinées à des fonctions de télécommande prévues dans l'appareil étant en outre contenues dans une première mémoire (21) du système de mémoire (21, 22, 23),
**caractérisé en ce**
**qu'**il existe une autre mémoire (23) dans laquelle sont mémorisés des numéros d'appel qui sont associés chacun à un ou plusieurs blocs de données de la première mémoire (21), et que, lorsqu'un message correspondant est initialisé dans la première mémoire (21) par l'appareil, le module présente des moyens pour sélectionner automatiquement un numéro d'appel et lui transmettre le message.

2. Module selon la revendication 1,
**caractérisé en ce**
**que** des données destinées à une commande de sortie vocale sont contenues dans une deuxième mémoire (22) du système de mémoire (21, 22, 23), les blocs de données de la deuxième mémoire (22) étant associés aux blocs de données de la première mémoire (21), et structurés de telle sorte qu'ils peuvent être sortis dans l'appareil terminal (14, 15) après conversion en langage humain intelligible.

3. Module selon la revendication 2,
**caractérisé en ce**
**que** la première mémoire (21) présente plusieurs registres (21a-21c) pour l'enregistrement des données mémorisées en mémoire morte,
**que** la deuxième mémoire (22) est dotée de plusieurs registres (22a-22c) pour l'enregistrement des données destinées à la commande de sortie vocale et l'autre mémoire (23) de plusieurs registres (23a-23c) pour la mémorisation des numéros d'appel et qu'elles sont associées à la première mémoire (21) de telle sorte
**qu'**il existe, aussi bien dans un registre (22a-22c) de la deuxième mémoire (22) que dans un registre (23a-23c) de l'autre mémoire (23), un bloc de données qui est associé au contenu d'un registre de la première mémoire (21),
et enfin qu'un organe de commande électronique (20) gère l'entrée et la sortie des données dans le module et la coordination des mémoires.

4. Module selon la revendication 2 ou 3,
**caractérisé en ce**
**que** la transmission du message au numéro d'appel sélectionné automatiquement par l'appareil se fait par la commande de sortie vocale de la deuxième mémoire (22).

5. Utilisation d'un module selon la revendication 1 avec un appareil (4) qui est adapté au module en ce qu'il possède une interface (5) avec le système de bus standard à fil (3), qu'il présente un dispositif de sortie de données (7) avec un organe de commande électronique (8) par lequel des données sont transmises, régulièrement ou en cas de besoin, au système de mémoire (21, 22, 23) du module et/ou qu'il présente un dispositif de mémoire de données (9) ainsi qu'un organe de commande (11) qui peut initialiser un système de télécommande (10) dans l'appareil et ainsi déclencher des fonctions dans celui-ci.

6. Utilisation d'un module selon la revendication 1 avec un appareil d'entrée et de sortie de données (14, 15) qui est approprié pour la réception sans fil de données du module et pour l'émission sans fil de données dans le module et qui possède, pour la présentation des données reçues, un afficheur et/ou une sortie vocale et/ou un écran, et est donc configuré notamment comme un téléphone sans fil.

## Claims

1. Bus connection module for connecting an electrical device, whose operating state is to be interrogated or influenced, to a separately located data input and output apparatus for incorporation with the device,
wherein the module has a memory system (21, 22, 23), an electronic control system (1) and, on the one hand, a first communications interface (2) with a wired standard bus system (3) for the device (4), and on the other hand at least one communications interface (12) with a wire-free, standardized bus system (13) for the data input and output device (14, 15),
wherein in addition a first memory (21) of the memory system (21, 22, 23) contains both permanently stored data which is correlated with operating states which are provided for the device and permanently stored data for remote control functions which are provided in the device, **characterized in that** there is a further memory (23) in which call numbers, which are each assigned to one or more data records of the first memory (22), are stored, **in that** the module has means for permitting the device to automatically dial a provided call number when a corresponding message is initialized in the first memory (21), and transmitting the message to this call number.

2. Module according to Claim 1, **characterized in that** a second memory (22) of the memory system (21, 22, 23) contains data for controlling a voice output, where the data records of the second memory (22) are assigned to the data records of the first memory (21) and are structured in such a way that after conversion into language which can be understood by people said data records can be output in the end device (14, 15).

3. Module according to Claim 2, **characterized in that** the first memory (21) has a plurality of registers (21a-21c) for holding the permanently stored data,
**in that** the second memory (22) is provided with a plurality of registers (22a-22c) for holding the data for controlling the voice output, and the further memory (23) is provided with a plurality of registers (23a-23c) for storing the call numbers and the latter two memories are assigned to the first memory (21) in such a way
that a data record which is assigned to the content of a register in the first memory (21) is present in, in each case, one register (22a-22c) of the second memory (22), and in a register (23a-23c) of the further memory (23),
and **in that** finally an electronic control unit (20) manages the data input and output in the module and the assignment of storage.

4. Module according to Claim 2 or 3, **characterized in that** the transmission of the message to the call number dialled automatically by the device is carried out by means of the voice output control of the second memory (22).

5. Use for a module according to Claim 1 having a device (4) which is adapted to the module in such a way that it has an interface (5) with the wired standard bus system (3), that it has a data output apparatus (7) including an electronic control unit (8), by means of which data output apparatus (7) data is transmitted into the memory system, (21, 22, 23) of the module at regular intervals or when necessary, and/or that it has a data storage apparatus (9) and a control unit (11) which can initialize a remote control system (10) in the device and thus trigger functions there.

6. Use for a module according to Claim 1 having a data input and output device (14, 15) which is suitable for the wire-free reception of data from the module and for the wire-free inputting of data into the module, and has a display and/or voice output and/or screen for outputting the received data, and is thus embodied in particular as a wire-free telephone.
